# EUROPEAN PATENT APPLICATION

(11) **EP 1 710 289 A1**
(43) Date of publication of application: **11.10.2006**
(21) Application number: 06250415.4
(22) Date of filing: 25.01.2006
(51) Int. Cl.: C09K 11/01, C09K 11/02, C09K 11/77

(54) **Method for making phosphors**

(30) Priority: 31.03.2005 US 96502
(71) Applicant: GENERAL ELECTRIC COMPANY, Schenectady, NY 12345 (US)
(72) Inventor: Loureiro, Sergio Paulo Martins, New York 12866 (US); Setlur, Anant Achyut, Niskayuna New York 12309 (US); Manoharan, Mohan, Niskayuna New York 12309 (US); Stoklosa, Stanley John, Clifton Park New York 12309 (US); Srivastava, Alok Mani, Niskayuna New York 12309 (US)
(74) Representative: Pedder, James Cuthbert

(57) **Abstract**

The phosphor composition (10/15) including a first phosphor (20) including a visible-light-emitting phosphor; and a second phosphor (30) having an average primary crystallite size of less than about 100 nm is provided. The second phosphor (30) includes at least one phosphor selected from a group consisting of a visible light emitting phosphor, ultraviolet (VUV) light emitting phosphor, and a quantum splitting phosphor. A method of making a phosphor composition is also provided. The method includes the steps of providing a first phosphor including a visible-light-emitting phosphor; providing a second phosphor having an average primary crystallite size of less than about 100 nm, and disposing the second phosphor onto to the first phosphor. The second phosphor (30) includes at least one phosphor selected from a group consisting of a visual light emitting phosphor, ultraviolet (VUV) light emitting phosphor, and a quantum splitting phosphor.

## Description

The invention relates generally to a method of making a hybrid phosphor composition.

Light generation in mercury low-pressure gas discharge lamps is based on the principle that during the gas discharge, a plasma develops in the mercury-containing gas filling within the lamp and emits electromagnetic ("EM") radiation predominantly in the ultraviolet ("UV") wavelength range. The UV radiation emitted by a low-pressure mercury discharge concentrates at wavelengths of about 254 nm and about 185 nm. A phosphor, which is typically coated on the lamp housing, is employed to convert the UV radiation into visible light.

One drawback of known mercury low-pressure gas discharge lamps is that the emissivity of the phosphors tend to decrease over the course of time due to degradation caused by the action of at least some of the incident UV radiation on the phosphor coating, the recombination of mercury ions and electrons on the phosphor surface, and the incidence of excited mercury atoms and electrons on the phosphor layer. This emissivity loss results in the reduction of the electro-optical efficiency in the course of the service life of the lamp. This degradation is particularly substantial under the influence of VUV (vacuum ultra violet) radiation, and especially that portion of VUV radiation having a wavelength below 200 nm. Degradation of the phosphor in a light source typically manifests itself as a shift of the color of the emitted light. Moreover, most of the phosphors used in current fluorescent lamps are only sensitive to radiation with wavelength around 254 nm, and consequently the mercury discharge radiation at about 185 nm wavelength does not contribute to the overall light out put of the lamp.

Therefore, effort has been devoted to finding means to improve the lumen efficiency of mercury discharge lamps. One approach is to use a mixture of phosphor particles and nano particles of aluminum oxide having a particle size of about 20 nm for a coating on the inner surface of the lamp housing. The aluminum oxide particles absorb the VUV radiation, but are transparent with respect to UV radiation having wavelength of 254 nm. As can be appreciated, this method would still allow some VUV radiation to be incident on the phosphor particles. However, aluminum oxide does not emit any light, thus, does not help to increase the efficiency of the lamp. Yet another approach is to utilize a two-layer micron size phosphor coating. The first layer exposed to the mercury discharge is a capable of absorbing VUV radiation and emitting in the wavelength range of 230 to 280 nm. The second layer is disposed between the first layer and the inner surface of the lamp housing and includes phosphors that absorb the shorter-wavelength UV radiation and emit visible light. However, this method may result in performance degradation due to significant scattering of the 254nm radiation.

Therefore, it is desirable to continue to search for other means to improve the light output and decrease lumen depreciation. It is also very desirable to achieve this goal and to improve the electro-optical efficiency of these devices at the same time.

The present invention meets these and other needs by a method for making a phosphor composition.

Accordingly, one aspect of the invention is to provide a phosphor composition. The phosphor composition includes a first phosphor includes a visible-light-emitting phosphor; and a second phosphor having an average primary crystallite size of less than about 100 nm. The second phosphor includes at least one phosphor selected from a group consisting of a visible light emitting phosphor, ultraviolet (VUV) light emitting phosphor, and a quantum splitting phosphor.

A second aspect of the invention is to provide a method of making a phosphor composition. The method includes the steps of providing a first phosphor including a visible-light-emitting phosphor; providing a second phosphor having an average primary crystallite size of less than about 100 nm and disposing the second phosphor onto the first phosphor. The second phosphor includes at least one phosphor selected from a group consisting of a visible light emitting phosphor, ultraviolet (VUV) light emitting phosphor, and a quantum splitting phosphor.

The invention will now be described in greater detail, by way of example, with reference to the drawings, in which:-
FIG 1 is a schematic representation of a phosphor composition, according to one embodiment of the present invention;
FIG 2 is a schematic representation of a phosphor composition, according to another embodiment of the present invention;
FIG 3 is a transmission electron microscopy (TEM) image of LaPO₄:Pr³⁺ disposed onto Y₂O₃:Eu³⁺;
FIG 4 is a high resolution transmission electron microscopy (HRTEM) image of a LaPO₄:Pr³⁺ disposed onto Y₂O₃:Eu³⁺;
FIG 5 is a emission spectrum of Y₂O₃:Eu³⁺ with and without LaPO₄:Pr³⁺ coating; and
FIG 6, 7 and 8 and 9 are flow charts illustrating methods for making a phosphor composition, according to certain embodiments of the invention.

In the following description, like reference characters designate like or corresponding parts throughout the several views shown in the figures. It is also understood that terms such as "top," "bottom," "outward," "inward," and the like are words of convenience and are not to be construed as limiting terms. Furthermore, whenever a particular aspect of the invention is said to comprise or consist of at least one of a number of elements of a group and combinations thereof, it is understood that the aspect may comprise or consist of any of the elements of the group, either individually or in combination with any of the other elements of that group.

Referring to the drawings in general, it will be understood that the illustrations are for the purpose of describing one embodiment of the invention and are not intended to limit the invention thereto.

As used herein, 'hybrid phosphor composition' or simply termed a 'phosphor composition' refers to a composite of phosphors, wherein a second phosphor may be the same composition as the first phosphor or a different composition from the first phosphor. In some embodiments, the second phosphor is disposed onto the first phosphor. The conversion of a single ultraviolet (UV) photon into more than one visible (vis) photons with the result that the quantum efficiency of luminescence exceeds unity is termed quantum splitting.

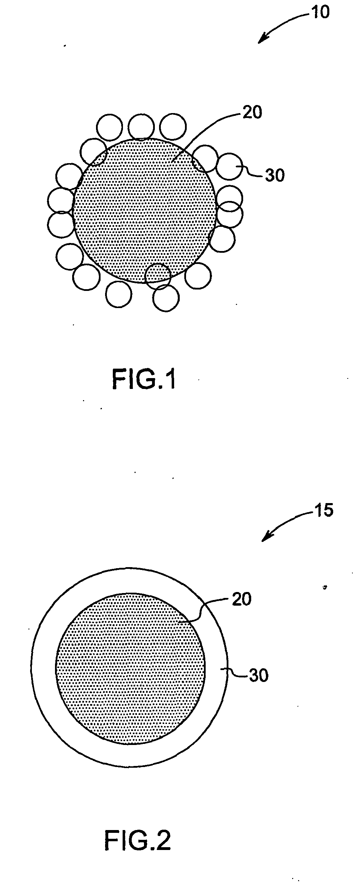

Schematic representations of a phosphor composition according to two different embodiments of the present invention are shown in Figure 1 and Figure 2. The phosphor composition includes a first phosphor (20) including a visible-light-emitting phosphor; and a second phosphor (30) having an average primary crystallite size of less than about 100 nm. The second phosphor includes at least one phosphor selected from a group consisting of a visible light emitting phosphor, an ultraviolet light emitting phosphor, and a quantum splitting phosphor. In one embodiment, the phosphor composition 10 comprises the second phosphor 30 disposed onto the first phosphor 20 as a layer of discrete particles as shown in Figure 1. In another embodiment, the phosphor composition 15 includes the second phosphor 30 disposed onto the first phosphor 20 as a substantially continuous shell as depicted in Figure 2. When the second phosphor 30 is disposed onto the first phosphor 20 as a layer of discrete particles, in one embodiment, the layer thickness ranges from about 10 nm to about 1000 nm. In another embodiment, the layer thickness ranges from about 20 nm to about 600 nm and in yet another embodiment, the layer thickness ranges from about 40 nm to about 500 nm. The layer of particles may comprise a plurality of sub-layers; the total thickness of the plurality of sub-layers is generally within one of the thickness ranges set forth above.

When the second phosphor 30 is disposed onto the first phosphor 20 as a substantially continuous shell, some discontinuity may exist as long as such discontinuity does not lead to substantial degradation of the luminescent property of the hybrid phosphor composition with use. The amounts of first and second phosphors present in the phosphor composition can be varied to suit the requirements of particular applications. The effect of adding increasing amounts of second phosphor will vary depending upon the particular first and second phosphors being used. In one embodiment, the second phosphor is present in an amount ranging from about 1 weight percent to about 99 weight percent of the phosphor composition. In certain embodiments, the amount of second phosphor is in the range from about 20 weight percent to about 35 weight percent, and in particular embodiments this amount is in the range from about 15 weight percent to about 25 weight percent.

In some embodiments, the first phosphor includes a plurality of particles having at least one dimension in a range from about 10 nanometers to about 10 microns. In certain embodiments, the first phosphor includes a plurality of particles having at least one dimension in a range from about 500 nanometers to about 5 microns, and in particular embodiments at least one dimension is in a range from about 1 micron to about 3 microns. Second phosphor 30 preferably has dimensions in the nanometer range (<100 nm), so that it does not attenuate the light emission from the first phosphor. In some embodiments, the second phosphor includes a plurality of particles having at least one dimension in a range from about 20 nanometers to about 80 nanometers, in other embodiments, the second phosphor comprises a plurality of particles having at least one dimension in a range from about 30 nanometers to about 40 nanometers. The first and the second phosphors may have any morphology. They may have same or different morphology. Suitable morphologies include, but are not limited to, spherical morphology, ellipsoidal morphology, elongated platelet morphology, rod-like morphology, needle-like morphology.

In some embodiments, the first phosphor substantially absorbs at least a portion of the electromagnetic radiation in a wavelength range from about 120 nm to about 500 nm of the electromagnetic spectrum and substantially emits at least a portion of the electromagnetic radiation in the wavelength region from about 220 nm to about 750 nm of the electromagnetic spectrum.

In certain embodiments, the first phosphor comprises at least a phosphor selected from a group consisting of BaMg₂Al₁₆O₂₇:Eu²⁺; CeMgAl₁₁O₁₉:Tb³⁺; Y₂O₃:Eu³⁺;(Ba,Sr,Ca)₅(PO₄)³(Cl,F,OH):Eu²⁺; (Ba,Sr,Ca)MgAl₁₀O₁₇:Eu²⁺; (Ba,Sr,Ca)BPO₅:Eu²⁺; Sr₄Al₁₄O₂₅:Eu²⁺; BaAl₈O₁₃:Eu²⁺; 2SrO·0.84P₂O₅·0.16B₂O₃:Eu²⁺; MgWO₄; BaTiP₂O₈; LaPO₄:Ce³⁺,Tb³⁺; GdMgB₅O₁₀:(Ce³⁺,Tb³⁺,Mn²⁺); GdMgB₅O₁₀:(Ce³⁺,Tb³⁺); (Tb,Y,Lu,La,Gd)₃(Al,Ga)5O₁₂:Ce3+; (Ba,Sr,Ca)₅(PO⁴)₃(Cl,F,OH):(Eu²⁺, Mn²⁺,Sb³⁺); (Y,Gd,La,Lu,Sc)₂O₃:Eu³⁺; (Y,Gd,La,In,Lu,Sc)BO₃:Eu³⁺; (Y,Gd,La)(Al,Ga)O₃:Eu³⁺; (Ba,Sr,Ca)(Y,Gd,La,Lu)₂O₄:Eu³⁺; (Y,Gd)Al₃B₄O₁₂:Eu³⁺: monoclinic Gd₂O₃:Eu³⁺; (Gd,Y)₄(Al,Ga)₂O₉:Eu³⁺; (Ca,Sr)(Gd,Y)₃(Ge,Si)Al₃O₉:Eu³⁺; GdMgB₅O₁₀:(Ce³⁺,Mn²⁺); 3.5MgO·0.5MgF₂·GeO₂:Mn⁴⁺, and combinations thereof.

More than one type of first phosphors can be used in the phosphor composition, for example, to produce visible light having different colors. For example, when white light is desired from a light source using the phosphor of the present invention, a blend of different first phosphors emitting in the blue, green, and red wavelength ranges may be used. As an example, a light source using a phosphor in accordance with the present invention may use a combination of BaMg₂Al₁₆O₂₇:Eu²⁺ as the blue light-emitting phosphor, CeMgAl₁₁O₁₉:Tb³⁺ as the green light-emitting phosphor, and Y₂O₃:Eu³⁺ as the red light-emitting phosphor to produce white light.

Other non-limiting examples of blue light-emitting phosphors are (Ba,Sr,Ca)₅(PO₄)³(Cl,F,OH):Eu²⁺; (Ba,Sr,Ca)MgAl₁₀O₁₇:Eu²⁺; and (Ba,Sr,Ca)BPO5:Eu²⁺. Non-limiting examples of phosphors that emit blue-green light are Sr₄Al₁₄O₂₅:Eu²⁺; BaAl₈O₁₃:Eu²⁺; 2SrO·0.84P₂O₅·0.16B₂O₃:Eu²⁺. MgWO₄; BaTiP₂O₈; (Ba,Sr,Ca)MgAl₁₀O₁₇:Eu²⁺,Mn²⁺; and (Ba,Sr,Ca)₅(PO₄)₃(Cl,F,OH):Sb³⁺. Other non-limiting examples of phosphors that emit green light are LaPO₄:Ce³⁺,Tb³⁺; GdMgB₅O₁₀:Ce³⁺, Tb³⁺, Mn²⁺; and GdMgB₅O₁₀:Ce³⁺, Tb³⁺. Non-limiting examples of phosphors that emit yellow-orange light are (Tb,Y,Lu,La,Gd)₃ (Al,Ga)5O₁₂:Ce³⁺; and (Ba,Sr,Ca)₅(PO₄)₃(Cl,F,OH):Eu²⁺, Mn²⁺, Sb³⁺. Other non-limiting examples of phosphors that emit red light are (Y,Gd,La,Lu, Sc)₂O₃:Eu³⁺; (Y,Gd,La,In,Lu,Sc)BO₃:Eu³⁺; (Y,Gd,La)(Al,Ga)O₃:Eu³⁺; (Ba,Sr,Ca)(Y,Gd, La,Lu)₂O₄:Eu³⁺; (Y,Gd)Al₃B₄O₁₂: Eu³⁺; monoclinic Gd₂O₃:Eu³⁺; (Gd,Y)₄(Al,Ga)₂O₉:Eu³⁺; (Ca,Sr)(Gd,Y)₃(Ge,Si)Al₃O₉:Eu³⁺; (Sr,Mg)₃(PO₄)₂:Sn²⁺; GdMgB₅O₁₀:Ce³⁺, Mn²⁺; and 3.5MgO·0.5MgF₂·GeO₂:Mn⁴⁺. Any of the compositions set forth above is suitable for use as a first phosphor in accordance with embodiments of the present invention.

In one embodiment, the second phosphor is a visible light emitting phosphor, that substantially absorbs at least a portion of the electromagnetic radiation in a wavelength range from about 120 nm to about 500 nm of the electromagnetic spectrum and emits at least a portion of the electromagnetic radiation in a wavelength range from about 220 nm to about 750 nm of the electromagnetic spectrum; in yet another embodiment, the second phosphor is a quantum splitting phosphor that substantially absorbs at least a portion of electromagnetic radiation in a wavelength range from about 120 nm to about 230 nm region of the electromagnetic spectrum and substantially emits at least a portion of the electromagnetic radiation in a wavelength range from about 220 nm to about 750 nm region of the electromagnetic spectrum; and yet in another embodiment the second phosphor is a UV emitting phosphor that substantially absorbs at least a portion of the electromagnetic radiation in the wavelength region from about 120 nm to about 230 nm of the electromagnetic spectrum and substantially emits at least a portion of the electromagnetic radiation in the wavelength region from about 220 nm to about 340 nm of the electromagnetic spectrum; or a combination of such phosphors.

In some embodiments, the second phosphor includes a visible light emitting phosphor selected from a group consisting of BaMg₂Al₁₆O₂₇:Eu²⁺; CeMgAl₁₁O₁₉:Tb³⁺; Y₂O₃:Eu³⁺;(Ba,Sr,Ca)₅(PO₄)³(Cl,F,OH):Eu²⁺; (Ba,Sr,Ca)MgAl₁₀O₁₇:Eu²⁺; (Ba,Sr,Ca)BPO₅:Eu²⁺; Sr₄Al₁₄O₂₅:Eu²⁺; BaAl_{B}O₁₃:EU²⁺; 2SrO·0.84P₂O₅·0.16B₂O₃:EU²⁺; MgWO₄; BaTiP₂O₈; LaPO₄:Ce³⁺,Tb³⁺; GdMgB₅O₁₀:(Ce³⁺,Tb³⁺,Mn²⁺); GdMgB₅O₁₀:(Ce³⁺,Tb³⁺); (Tb,Y,Lu,La,Gd)₃(Al,Ga)5O₁₂:Ce³⁺; (Ba,Sr,Ca)₅(PO⁴)₃(Cl,F,OH):(Eu²⁺, Mn²⁺,Sb³⁺); (Y,Gd,La,Lu,Sc)₂O₃:Eu³⁺; (Y,Gd,La,ln,Lu,Sc)B0₃:Eu³⁺; (Y,Gd,La)(Al,Ga)O₃:Eu³⁺; (Ba,Sr,Ca)(Y,Gd,La,Lu)₂O₄:Eu³⁺; (Y,Gd)Al₃B₄O₁₂:Eu³⁺; monoclinic Gd₂O₃:Eu³⁺; (Gd,Y)₄(Al,Ga)₂O₉:Eu³⁺; (Ca,Sr)(Gd,Y)₃(Ge,Si)Al₃O₉:Eu³⁺; GdMgB₅O₁₀:(Ce³⁺,Mn²⁺); 3.5MgO·0.5MgF₂·GeO₂:Mn⁴⁺, and combinations thereof.

In some other embodiments, the second phosphor includes a quantum splitting phosphor. Non-limiting examples of the second phosphor are LaPO₄:Pr³⁺, LaB₃O₆:Pr³⁺, LaBO₃:Pr³⁺, YBO₃:Pr³⁺, GdBO₃:Pr³⁺, LuBO₃:Pr³⁺, (Gd,Y)B₃O₆:Pr³⁺, (Sr,Ca)Al₁₂O₁₉: Pr³⁺, (La,Gd,Y)MgB₅O₁₀:Pr³⁺, SrB₄O₇:Pr³⁺, CaMgAl_{11.33}O₁₉:Pr³⁺, CaMgAl₁₄O₂₃:Pr³⁺, YPO₄:Pr³⁺, GdPO₄:Pr³⁺, Y₂SiO₅:Pr³⁺, and YPO₄:Bi³⁺, LuPO₄:Bi³⁺. Activator ions of Pb²⁺ can also be used in the foregoing hosts, either alone or in combination with at least one of Pr3⁺ and Bi³⁺, to yield VUV radiation-absorbing phosphors (e.g.; LaPO₄:Pr³⁺,Pb²⁺; LaB₃O₆:Pr³⁺,Pb²⁺; LaBO₃:Pr³⁺,Pb²⁺; YBO₃:Pr³⁺,Pb²⁺; GdBO₃:Pr³⁺,Pb²⁺; LuBO₃:Pr³⁺,Pb²⁺; (Gd,Y)B₃O₆:Pr³⁺,Pb²⁺; (Sr,Ca)Al₁₂O₁₉: Pr³⁺,Pb²⁺; (La,Gd,Y)MgB₅O₁₀:Pr³⁺,Pb²⁺; SrB₄O₇:Pr³⁺,Pb²⁺; CaMgAl_{11.33}O₁₉:Pr³⁺,Pb²⁺; CaMgAl₁₄O₂₃:Pr³⁺,Pb²⁺; YPO₄:Pr³⁺,Pb²⁺; GdPO₄:Pr³⁺,Pb²⁺; Y₂SiO₅:Pr³⁺,Pb²⁺; YP0₄:Bi³⁺,Pb²⁺; LuPO₄:Bi³⁺,Pb²⁺; LaPO₄:Pr³⁺,Pb²⁺,Bi³⁺; LaB₃O₆:Pr^{3+,}Pb²⁺,Bi³⁺; LaB03:Pr3+,Pb2+,Bi³⁺; YBO₃:Pr³⁺,Pb²⁺,Bi³⁺; GdBO₃:Pr³⁺,Pb²⁺,Bi³⁺; LuBO₃:Pr³⁺,Pb²⁺,Bi³⁺; (Gd,Y)B₃O₆:Pr³⁺,Pb²⁺,Bi³⁺; (Sr,Ca)Al₁₂O₁₉:Pr+ ,Pb²+ ,Bi³⁺; (La,Gd,Y)MgB₅O₁₀:Pr³⁺,Pb²⁺,Bi³⁺; SrB₄O₇:Pr³⁺,Pb²⁺,Bi³⁺; CaMgAl_{11.33}O₁₉:Pr³⁺,Pb²⁺,Bi³⁺; CaMgAl₁₄O₂₃:Pr³⁺,Pb²⁺,Bi³⁺; YPO₄:Pr³⁺,Pb²⁺,Bi³⁺; GdPO₄:Pr³⁺,Pb²⁺,Bi³⁺; Y₂SiO₅:Pr³⁺,Pb²⁺,Bi³⁺; YPO₄:Pr³⁺,Bi³⁺,Pb²⁺; or LuPO₄:Pr³⁺,Bi³⁺,Pb²⁺). Other suitable second phosphors are (Ca,Mg,Sr)SO₄:Pb²⁺, CaLi₂SiO₄:Pb²⁺, (Ca,Ba,Sr)SiO₃:Pb²⁺, Ba(Y,Gd,Lu)B₉O₁₆:Bi³⁺, YF₃:Bi³⁺, YOF:Bi³⁺, (Gd,Y)OF:Bi³⁺,Pr³⁺, and (Y,Gd)₃Al₅O₁₂:Bi³⁺. More than one type of second phosphors can be used, for example, to ensure that substantially all of the VUV emitted by the plasma is absorbed.

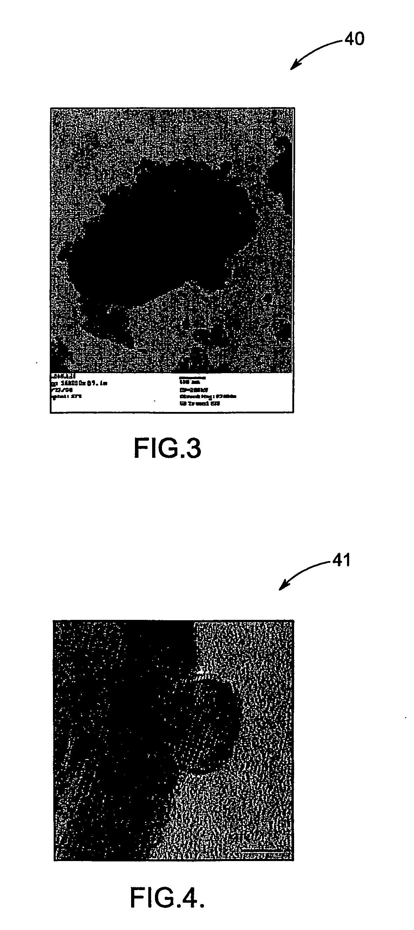

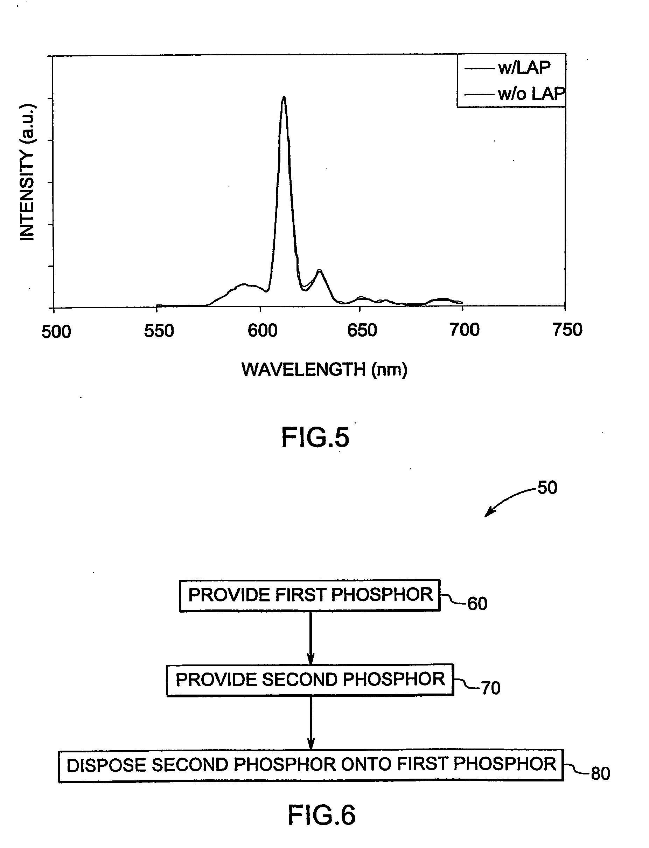

Figure 3 is a transmission electron microscopy image of LaPO₄:Pr³⁺ disposed onto Y₂O₃:Eu³⁺. The image shows a particle of Y₂O₃:Eu³⁺ coated with a plurality of LaPO₄:Pr³⁺ nanoparticles. Figure 4 shows a high resolution electron micrograph of a nanoparticle of LaPO₄:Pr³⁺ disposed onto Y₂O₃:Eu³⁺ (phosphor composition 40).

FIG 5 is an emission spectrum of Y₂O₃:Eu³⁺ under 254 nm excitation with and without LaPO₄:Pr³⁺ coating. The emission spectrum remains the same with and without the coating, implying that LaPO₄:Pr³⁺ coating does not hinder the light emission from Y₂O₃:Eu³⁺.

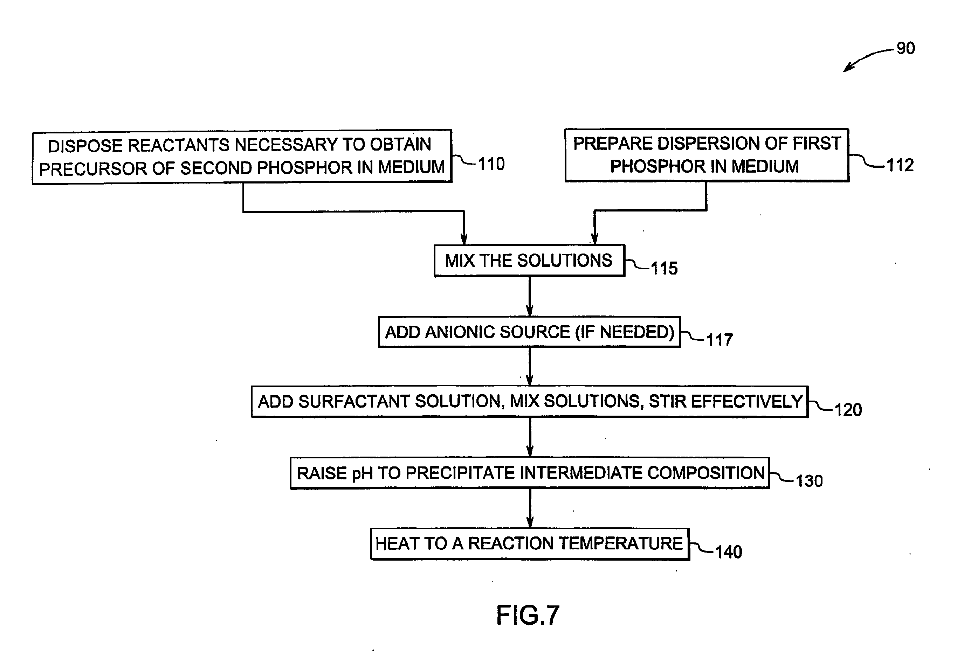

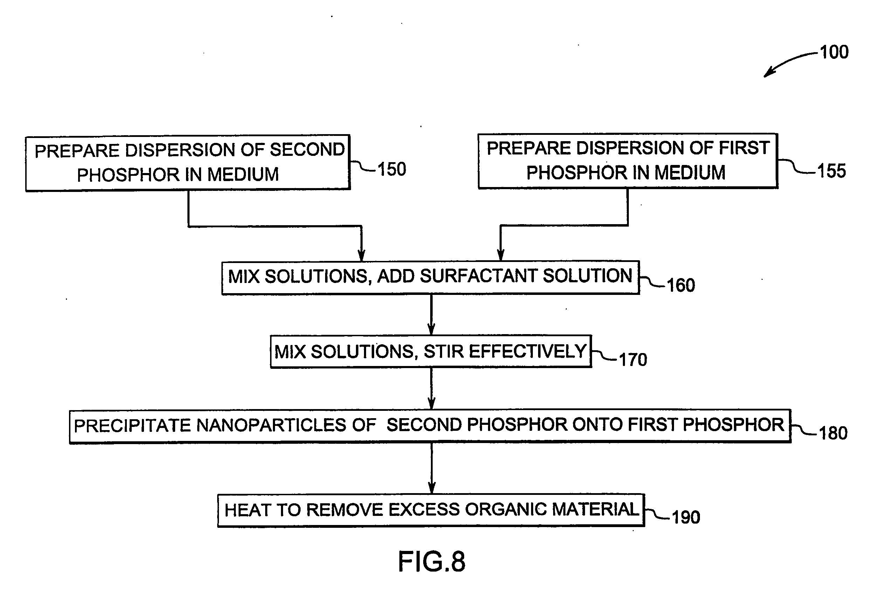

Another aspect of the invention is to provide a method for preparing a phosphor composition. The method of making a phosphor composition is shown as a flow diagram in Figure 6. The method 50 begins with step 60, wherein a first phosphor including a visible light emitting phosphor is provided. In step 70, a second phosphor is provided and the second phosphor is disposed onto the first phosphor in step 80. The second phosphor may be provided and disposed onto the first phosphor in situ or ex situ. The process is termed in situ when the second phosphor is produced during the coating process. A flow chart illustrating an in situ process (method 90) is depicted in figure 7. The process is termed ex-situ when the second phosphor is made in a separate process and then disposed onto the first phosphor during the process of the present invention. Figure 8 illustrates the ex-situ process (method 100) of preparing the phosphor composition.

The size and shape of the phosphors may vary including the size ranges and morphologies specified in the composition embodiments. Particles of phosphors used may be prepared by any synthesis method known in the art. Generally, phosphors are provided dispersed in a liquid medium. Any suitable liquid medium may be used. In some embodiments, the liquid medium includes water.

The method may further optionally include providing the first phosphor and the second phosphor with protective coatings to prevent lumen degradation during coating. The protective coating may be provided for the first phosphor only, the second phosphor only, or for both the first and the second phosphor. In some embodiments, the protective coating is obtained on the phosphor by mixing a dispersion of the phosphor with a surfactant. In some embodiments, the dispersion comprising the phosphor and the surfactant is heated to a sufficient temperature to a sufficient duration of time to obtain a chemically stable protective coating, which can protect the phosphor from the reacting media during processing. Any of a number of commercially available surfactants is suitable for use in embodiments of the present invention. Surfactant comprises at least one surfactant selected from a group consisting of cationic surfactants, anionic surfactants, non-ionic phosphor and combinations thereof; wherein the non-ionic surfactants are selected from the group consisting of polar surfactants, non-polar surfactants, and combinations thereof.

The amount of the first phosphor and second phosphor may vary depending on the final phosphor composition needed. In addition, the effect of adding increasing amounts of second phosphor will vary depending upon the particular first and second phosphors being used. In one embodiment, the second phosphor is present in an amount ranging from about 1 weight percent to about 99 weight percent of the phosphor composition. In certain embodiments, the amount of second phosphor is in the range from about 20 weight percent to about 35 weight percent, and in particular embodiments this amount is in the range from about 15 weight percent to about 25 weight percent.

When the second phosphor is provided in situ, generally in step 110, the reactants necessary to obtain second phosphor are provided. Generally, a precursor of the second phosphor is disposed in a medium to form a solution, a gel, a suspension, a colloid, or a dispersion. Non-limiting examples of precursors include nitrates, chlorides, alkoxides, acetates and oxides. The medium preferably has a low viscosity to facilitate flow and adequate mixing. If required, a source of anion is added to the above solution in an optional step 115. For example, in the synthesis of LaPO₄:Pr, a PO₄³⁻ source such as phosphoric acid or ammonium hydrogen phosphate may be provided. A surfactant solution is added optionally in step 117. In some exemplary embodiments, disposing the second phosphor onto the first phosphor in situ includes mixing the mixture including the reactants necessary to obtain a precursor of the second phosphor, the surfactant, source of anions (added if required) with the dispersion of the first phosphor disposed in a medium (obtained in step 112), in step 120. When the process is in-situ, an intermediate composition of the second phosphor is precipitated by raising the pH of the above mixture by adding a basic component, in step 130. Any suitable base may be used. Non-limiting examples of suitable basic components are sodium hydroxide, tetra methyl ammonium hydroxide, and ammonium hydroxide. The intermediate composition of the second phosphor is converted into the desired second phosphor phase by heating to a reaction temperature, in step 140. The heating temperature may vary and depends on the composition of the phosphor. In general, certain oxide phosphor compositions may require higher temperatures to form the desired phase, while phosphate phosphor compositions may require lower temperatures.

When the method is ex-situ, nanoparticles of the second phosphor are prepared by a separate process, and used in the process of the present invention. Nanoparticles of inorganic materials, such as the second phosphors herein disclosed, may be prepared by a number of methods. One method of preparation is flame spray pyrolysis of a solution of the precursors of the inorganic material. Such a method is described, for example, in U.S. Patent 5,958,361, which is incorporated herein in its entirety by reference. In this method, an organometallic compound that comprises the desired metals and other heteroatoms in appropriate ratios (to achieve the final chemical composition of the phosphor) is dissolved in a combustible solvent, in which the organomettalic compound is soluble, to form a solution. The solution is then aerosolized into a flame spray pyrolysis reactor in the presence of excess oxygen. The volatile solvent is burned, and the precursors decomposed to produce an inorganic vapor in the correct chemical composition of the final phosphor. The inorganic vapor condenses rapidly in a steep temperature gradient to form nanometer-sized particles of the phosphor. A variation of this technique is found in R. Baranwal et al., "Flame Spray Pyrolysis of Precursors as a Route to Nano-mullite Powder: Powder Characterization and Sintering Behavior," J. Am. Ceram. Soc., Vol. 84, No.5, pp. 951-61 (2001).

Another method for the preparation of the nanometer-sized particles of inorganic materials is based on the solution-phase inverse-microemulsion technique. A representative description of this technique is found in W. Que et al., "Preparation and Characterization of Erbium Oxalate and Erbium Oxide Nanoparticles by Microemulsion Technique," Materials Science and Engineering C, Vol. 16, pp. 51-54 (2001). In this technique, a thermodynamically stable and optically isotropic dispersion of aqueous microdroplets in a continuous organic (oil) phase is first prepared. The aqueous microdroplets contain inorganic compounds or their precursors in appropriate proportions to achieve the desired final phosphor composition. The microdroplets are stabilized by surfactant molecules at the water-oil interface. The microemulsion is pyrolyzed to produce nanometer-sized particle of the final inorganic material. This technique can produce particle size in the range of about 5-30 nm.

Another method for the preparation of the nanometer-sized particles of inorganic materials is based on the sol-gel method. A representative description of this method is disclosed in R. Subramanian et al., "Synthesis of Nanocrystalline Yttria by Sol-Gel Method," Materials Letters, Vol. 48, pp. 342-346 (May 2001). Nanocrystalline inorganic materials are produced by precipitation by a hydroxide, such as ammonium hydroxide, from a soluble precursor mixture containing all of the desired elements. In an exemplary embodiment, particle sizes in the range from about 20 to 40 nm are produced by this method.

Another method for the preparation of the nanometer-sized particles of inorganic materials is based on the colloidal method. Representative descriptions of this method and one of its variations are disclosed in R. Ramesh et al., "Optical Properties of Ce3+ in Self-Assembled Strontium Chloro(hydroxy)apatite Nanocrystals," J. Phys. Chem. B, Vol. 104, pp. 8351-8360 (2000); T.S. Ahmadi et al., "Low-Temperature Synthesis of Pure and Mn-Doped Willemite Phosphor (Zn2SiO4:Mn) in Aqueous Medium," Materials Research Bulletin, Vol. 35, pp. 1869-1879 (2000); and C. Feldmann et al., "Preparation of Sub-Micrometer LnPO4 Particles (Ln = La, Ce)," J. of Materials Science, Vol. 37, pp. 3251-3254 (2002). A mixture comprising reactants is stirred at high speed at an elevated temperature, and the cooled rapidly to produce nanometer-sized colloidal particles. It is expected that the resulting particle size varies inversely with respect to stirring speed and cooling rate. Particles sizes from about 10 nm to several thousand nanometers may be obtained.

In an ex situ process (figure 8), in accordance with one embodiment of the present invention, a dispersion of second phosphor is formed in a liquid medium, in step 150, and another dispersion of the first phosphor is formed in a liquid medium in step 155. In some embodiments, the liquid medium comprises water. In an exemplary embodiment of the present invention, disposing the second phosphor onto the first phosphor includes mixing the dispersion of the first phosphor obtained in step 150, and the dispersion of the second phosphor obtained in step 160 with a surfactant in step 160. The mixture is stirred in step 170. In an ex situ process, a plurality of nanoparticles of the second phosphor having an average primary crystallite size of less than about 100 nm are precipitated onto the first phosphor, in step 180. If needed, any excess organic material is removed by heating, in step 190.

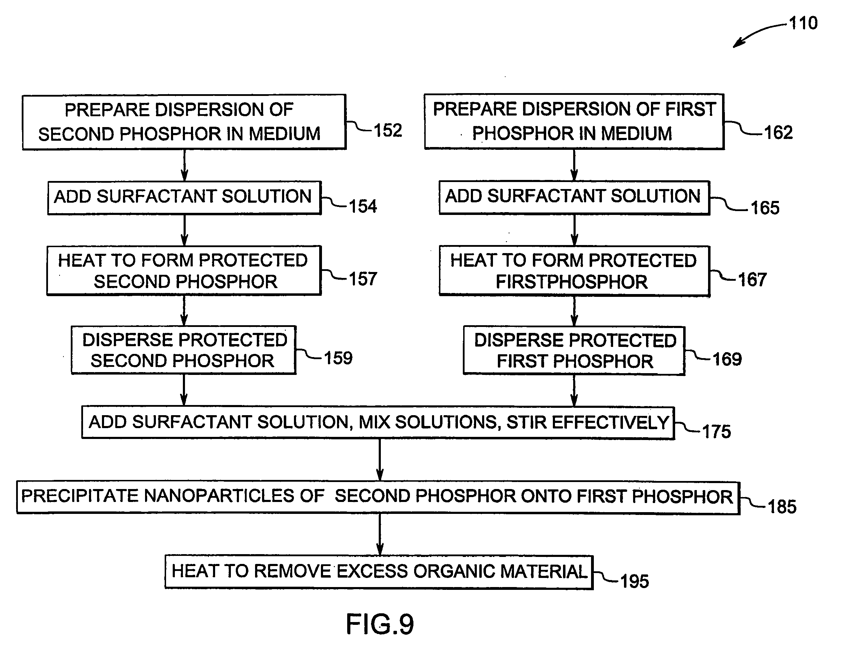

Figure 9 illustrates the flow chart of an ex situ process (method 110), where the first phosphor and the second phosphor are provided with a protective organic coating. In one embodiment of the ex-situ process, a dispersion the second phosphor is formed in a liquid medium, in step 152. In some embodiments, the liquid medium comprises water. A surfactant solution is added to the above dispersion in step 154. Any suitable surfactant selected from a group consisting of ionic surfactants, non-ionic surfactants and amphiphilic polymers may be used. The resulting mixture is heated to form a protected second phosphor system in step 157. The temperature is preferably sufficient to remove most of the organic material, but leaves a protective coating covering the second phosphor, and will be dependent on the type of surfactant used, but typically above 200°C. The protected second phosphor system is redispersed in a liquid medium in step 159. In some embodiments, the liquid medium comprises water. A similar process can optionally occur for the first phosphor and is described in steps 165, 167, and 169. The protection can optionally occur for the first phosphor only, the second phosphor only, or for both first and second phosphor prior to step 175.

In an exemplary embodiment of the present invention, disposing the second phosphor onto the first phosphor includes mixing the mixture including a dispersion of the protected second phosphor with a dispersion of the protected first phosphor (obtained at step 167) with a surfactant in step 175. In an ex situ process, a plurality of nanoparticles of the protected second phosphor having an average primary crystallite size of less than about 100 nm are precipitated onto the protected first phosphor, in step 185. Any excess organic material is removed by heating, in step 195. Heating temperature may vary depending on the organic residue present. Typically heating temperature ranges from about 100°C to about 1000°C. In one embodiment, it is from 200°C to about 800°C and in another embodiment the heating temperature ranges from about 400°C to about 600°C.

The following example serves to illustrate the features and advantages offered by the present invention, and not intended to limit the invention thereto.

### Example

The following example describes the preparation method for an ex-situ process with two side protection for preparing a hybrid phosphor containing LaPO₄:Pr³⁺ (LAP:Pr) nano size particles disposed onto Y₂O₃:Eu³⁺ (YEO) micron size phosphor particles.

Desired amount of LAP:Pr nano particles was dispersed in a surfactant solution and stirred for 30 minutes. Desired amount of YEO was dispersed separately in a surfactant solution and stirred for 30 minutes. Each solution was poured into a glazed porcelain dish, and dried for 10 hr in a drying oven at 100°C. The dish was transferred to a furnace and heated up to 600°C and cooled to room temperature. The white powder obtained was ground in a mortar and pestle and sieved through 100 mesh nylon. The two dispersions containing protected particles were re-dispersed and mixed with a surfactant solution and stirred for 30 min. The pH was raised and the mixture was heated to temperatures above 600°C. The hybrid phosphor was collected, ground, and sieved.

## Claims

1. A method of making a phosphor composition(60) comprising.
i) providing a first phosphor (70) comprising a visible-light-emitting phosphor;
ii) providing a second phosphor (80) having an average primary crystallite size of less than about 100 nm, and wherein the second phosphor (30) comprises at least one phosphor selected from a group consisting of a visual light emitting phosphor, ultraviolet (VUV) light emitting phosphor, and a quantum splitting phosphor; and
iii) disposing said second phosphor on to said first phosphor (80).

2. The method of Claim 1, wherein providing said first phosphor (70) further comprises providing said first phosphor with a protective coating.

3. The method of Claim 1, wherein providing said second phosphor (80) further comprises providing said second phosphor with a protective coating.

4. The method of Claim 1, wherein providing said second phosphor comprises providing a precursor of said second phosphor disposed in a medium to form at least one of a solution, a gel, a suspension, a colloid, and a dispersion.

5. The method of Claim 1, wherein disposing said second phosphor onto said first phosphor (80) comprises raising pH of medium with a basic component to precipitate an intermediate composition of second phosphor.

6. The method of Claim 1, wherein disposing said second phosphor onto said first phosphor (80) comprises precipitating a plurality of nanoparticles of said second phosphor having an average primary crystallite size of less than about 100 nm onto said first phosphor.
